# EUROPEAN PATENT APPLICATION

(11) **EP 3 136 215 A1**
(43) Date of publication of application: **01.03.2017**
(21) Application number: 15183047.8
(22) Date of filing: 28.08.2015
(51) Int. Cl.: G06F 3/0488, G06F 1/16, G06F 3/0362, G06F 3/0484

(54) **RESPONDING TO USER INPUT**

(71) Applicant: Nokia Technologies Oy, 02610 Espoo (FI)
(72) Inventor: LAAKSONEN, Lasse Juhani, 33210 Tampere (FI)
(74) Representative: Derry, Paul Stefan

(57) **Abstract**

Apparatus comprises: a processor arrangement; a memory arrangement; and computer code stored in the memory arrangement. The computer code is configured so as to cause the processor arrangement to perform: at a time when content from a foreground application is being displayed on a display, responding to a user input comprising movement around a periphery of the display by causing a background application to perform a function.

## Description

### Field

The present disclosure relates to methods, apparatus and computer programs for responding to user input.

### Background

A smart watch is a device that would preferably be able to carry out fairly complicated tasks and even to multitask, but it is limited by one-hand operation and small size. Smart watch devices typically employ user interfaces comprised of a digital display disposed in the front face of the watch housing. Such digital displays often comprise touch screens that enable the use of a finger to control operation of the device. Several buttons may be arranged in the sides of the housing adjacent to the display. These buttons are used to input information into the device and to control the display of information by the device via the display.

### Summary of Embodiments

Various aspects of examples of the present disclosure are set out in the claims.

A first aspect of the specification provides a method comprising:
at a time when content from a foreground application is being displayed on a display, responding to a user input comprising movement around a periphery of the display by causing a background application to perform a function.

Causing a background application to perform a function may comprise causing the background application to cause display of content generated by the background application.

Causing a background application to perform a function may comprise causing the background application to change a value of a parameter associated with the background application. The method may comprise causing the background application to change the value of the parameter by an amount dependent on a size of the user input. The method may comprise comprising the background application causing display of the value of the parameter as the parameter is changed by the user input.

The method may comprise responding to a user input comprising an input at a location on the display associated with the background application applied simultaneously with an input at the periphery of the display by causing a global setting of association between later user inputs at the periphery of the display with the background application.

The method may comprise responding to a user input comprising an input at a location on the display associated with the background application applied simultaneously with an input at the periphery of the display by causing a local setting specifying how parameters associated with the background application are adjusted in response to later user inputs at the periphery of the display causing the background application to perform a function.

The location on the display associated with the background application may comprise a location at which an icon associated with the background application is displayed.

The method may comprise responding to a user input of a touch input moving between two locations around a periphery of the display by causing the background application to perform the function.

The two locations may be locations on a touch-sensitive display. The two locations may be locations on a touch-sensitive non-display component.

The method may comprise responding to a user input of rotation of a rotatable bezel located at the periphery of the display.

A second aspect of the specification provides a computer program comprising computer executable instructions, which, when executed by an apparatus, causes the apparatus to perform a method according to any preceding claim.

A third aspect of the specification provides apparatus configured to perform the method above.

A fourth aspect of the specification provides apparatus comprising:
means for, at a time when content from a foreground application is being displayed on a display, responding to a user input comprising movement around a periphery of the display by causing a background application to perform a function.

A fifth aspect of the specification provides apparatus comprising:
a processor arrangement; a memory arrangement; and computer code stored in the memory arrangement, wherein the computer code is configured so as to cause the processor arrangement to perform:
   at a time when content from a foreground application is being displayed on a display, responding to a user input comprising movement around a periphery of the display by causing a background application to perform a function.

The computer code may be configured so as to cause the processor arrangement to perform causing a background application to perform a function by causing the background application to cause display of content generated by the background application.

The computer code may be configured so as to cause the processor arrangement to perform causing a background application to perform a function by causing the background application to change a value of a parameter associated with the background application.

The computer code may be configured so as to cause the processor arrangement to perform causing the background application to change the value of the parameter by an amount dependent on a size of the user input. The background application may cause display of the value of the parameter as the parameter is changed by the user input.

The computer code may be configured so as to cause the processor arrangement to perform responding to a user input comprising an input at a location on the display associated with the background application applied simultaneously with an input at the periphery of the display by causing a global setting of association between later user inputs at the periphery of the display with the background application.

The computer code may be configured so as to cause the processor arrangement to perform responding to a user input comprising an input at a location on the display associated with the background application applied simultaneously with an input at the periphery of the display by causing a local setting specifying how parameters associated with the background application are adjusted in response to later user inputs at the periphery of the display causing the background application to perform a function.

The location on the display associated with the background application may comprise a location at which an icon associated with the background application is displayed.

The computer code may be configured so as to cause the processor arrangement to perform responding to a user input of a touch input moving between two locations around a periphery of the display by causing the background application to perform the function.

The two locations may be locations on a touch-sensitive display. The two locations may be locations on a touch-sensitive non-display component.

The computer code may be configured so as to cause the processor arrangement to perform responding to a user input of rotation of a rotatable bezel located at the periphery of the display.

A sixth aspect of the specification provides a computer readable medium having stored therein computer code comprising machine readable instructions that when executed by a processor arrangement cause the processor arrangement to perform:
at a time when content from a foreground application is being displayed on a display, responding to a user input comprising movement around a periphery of the display by causing a background application to perform a function.

### Brief Description of Drawings

For a more complete understanding of example embodiments of the present disclosure, reference is now made to the following descriptions taken in connection with the accompanying drawings in which:
Figure 1(a) illustrates an exemplary smart watch according to aspects of the present disclosure;
Figure 1(b) illustrates a side view of an exemplary smart watch according to aspects of the present disclosure;
Figure 2(a) illustrates an exemplary device with a mechanical rotating bezel, according to embodiments of the present disclosure;
Figure 2(b) illustrates an exemplary device with a digital smart bezel, according to embodiments of the present disclosure;
Figure 2(c) illustrates an exemplary device with a combination bezel, according to embodiments of the present disclosure;
Figure 3(a) illustrates a user providing input to a device according to embodiments of the present disclosure having a mechanical bezel;
Figure 3(b) illustrates a user providing input to a device according to embodiments of the present disclosure having a smart bezel;
Figure 4 is a schematic diagram of a device with a smart bezel according to aspects of the present disclosure including components according to aspects of the present disclosure and operating according to aspects of the present disclosure;
Figure 5 illustrates an exemplary device having a smart bezel of Figure 2(b) where the device displays a home screen, according to an embodiment of the present disclosure;
Figure 6 is a flow chart illustrating operation of a device with a smart bezel of Figure 2(b) according to an embodiment of the present disclosure;
Figure 7(a) illustrates an exemplary device having a smart bezel of Figure 2(b) where the device displays an image generated by a map application, according to an embodiment of the present disclosure;
Figure 7(b) illustrates an exemplary device having a smart bezel of Figure 2(b) where a user provides an input to the device to view a parameter of a parking payment application running in the background, according to an embodiment of the present disclosure;
Figure 7(c) illustrates an exemplary device having a smart bezel of Figure 2(b) where a user provides an input to the device to adjust a parameter of a parking payment application running in the background, according to an embodiment of the present disclosure;
Figure 8(a) illustrates an exemplary device having a smart bezel of Figure 2(b) where the device displays an image generated by a news application according to an embodiment of the present disclosure;

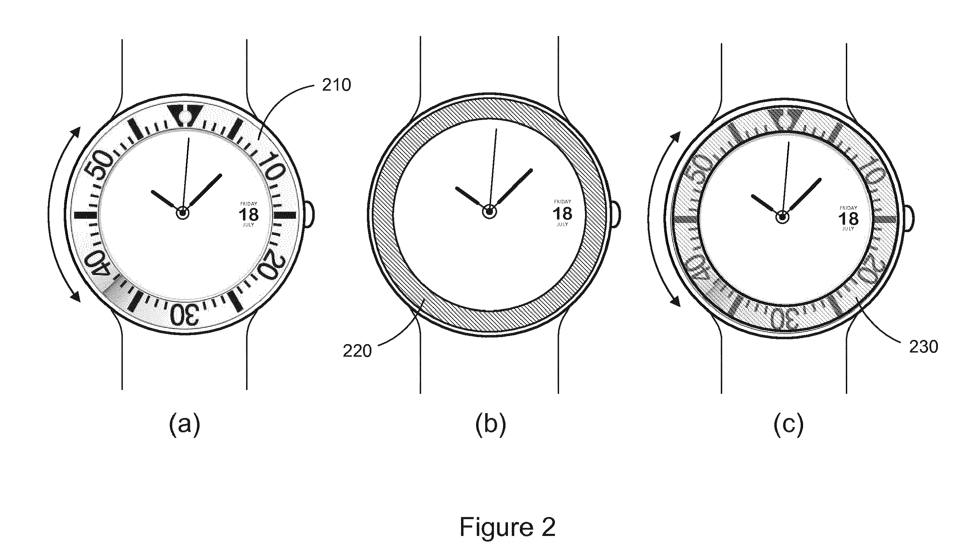

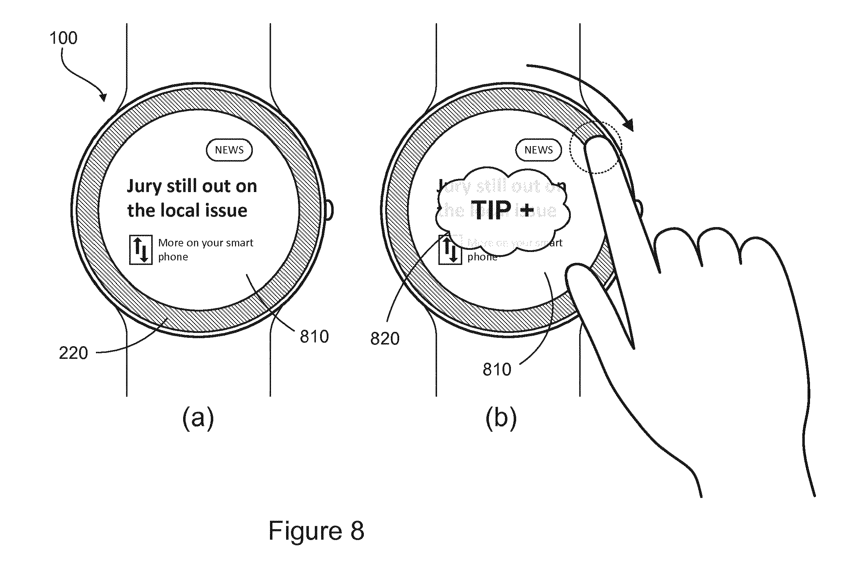

Figure 8(a) illustrates an exemplary device having a smart bezel of Figure 2(b) where a user provides an input to the device to adjust a parameter of a tip application running in the background, according to an embodiment of the present disclosure;

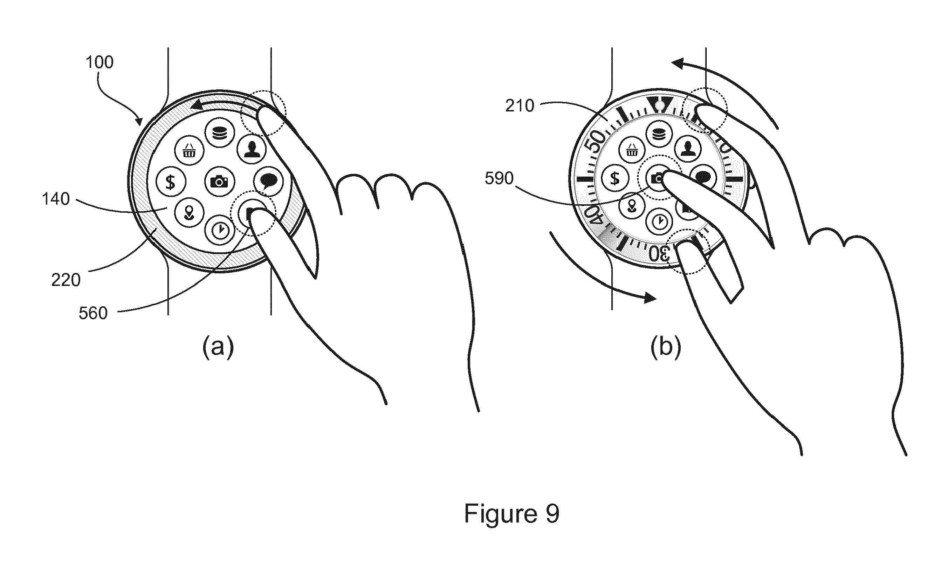

Figure 9(a) illustrates an exemplary device having a smart bezel of Figure 2(b) where a user adjusts the functionality of the smart bezel in accordance with a background application, according to an embodiment of the present disclosure;
Figure 9(b) illustrates an exemplary device having a mechanical bezel of Figure 2(a) where a user adjusts the functionality of the mechanical bezel in accordance with a background application, according to an embodiment of the present disclosure;

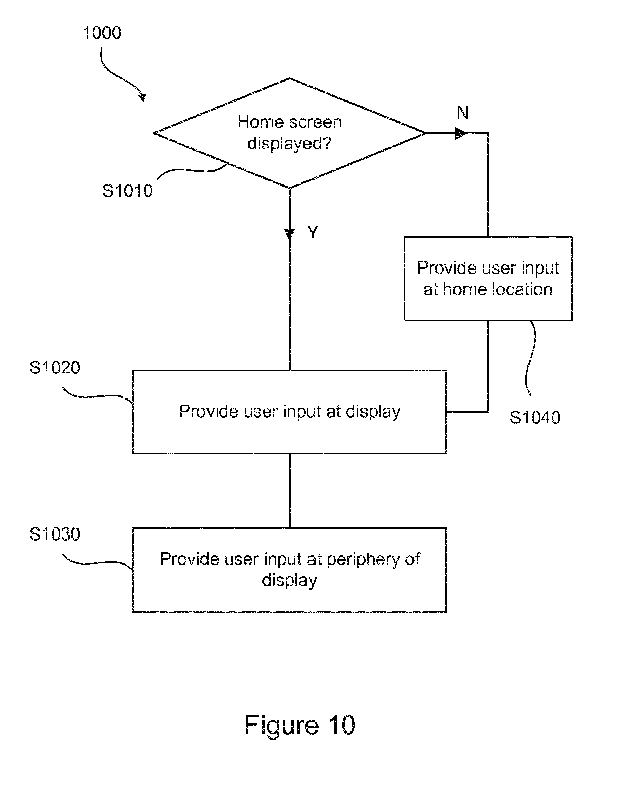

Figure 10 is a flow chart illustrating operation of a device of Figure 2(b) according to an embodiment of the present disclosure in which a user adjusts a global setting of the device where an application is assigned to be controlled by the smart bezel; and

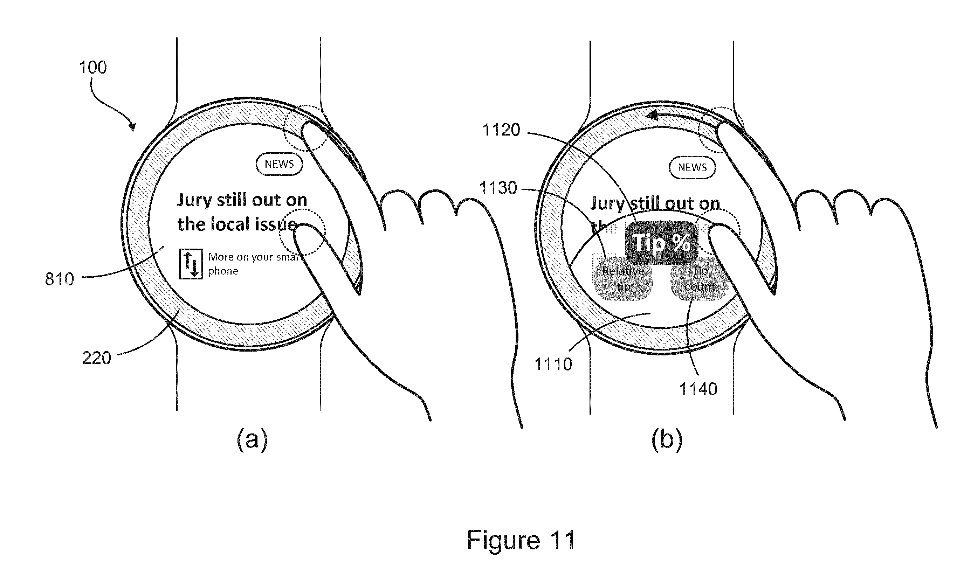

Figure 11 is a flow chart illustrating operation of a device of Figure 2(b) according to an embodiment of the present disclosure in which a user adjusts a local setting of an application running in the background where a setting of the background application is assigned to be controlled by the smart bezel.

### Detailed Description

The present disclosure is directed to an apparatus such as a smart watch that provides novel user interface features for added functionality. Using a rotatable bezel and/or a smart bezel comprising a periphery of a touch-sensitive display or a touch-sensitive area surrounding a display, and providing an input around the periphery of the display, the user is able to control a background application running on the smart watch while an image from a foreground application is displayed on the face of the smart watch. Through such user interface features, the user does not have to toggle between the foreground application and the background application to perform control. Instead, the background application can remain as the background application and the foreground application can remain as the foreground application.

Providing the user with the ability to control the background application without toggling between the background and foreground applications reduces the input required from the user to achieve a function from an application other than the foreground application with which the user is primarily interested. This is particularly useful on devices with very limited screen sizes, particularly smart watches, where it is desired to minimise the proportion of the display area that is not given over to content for the foreground application and on generally small devices with limited user input hardware.

In effect, this enables the user to multi-task between the functionalities provided by a plurality of application images generated by the smart watch.

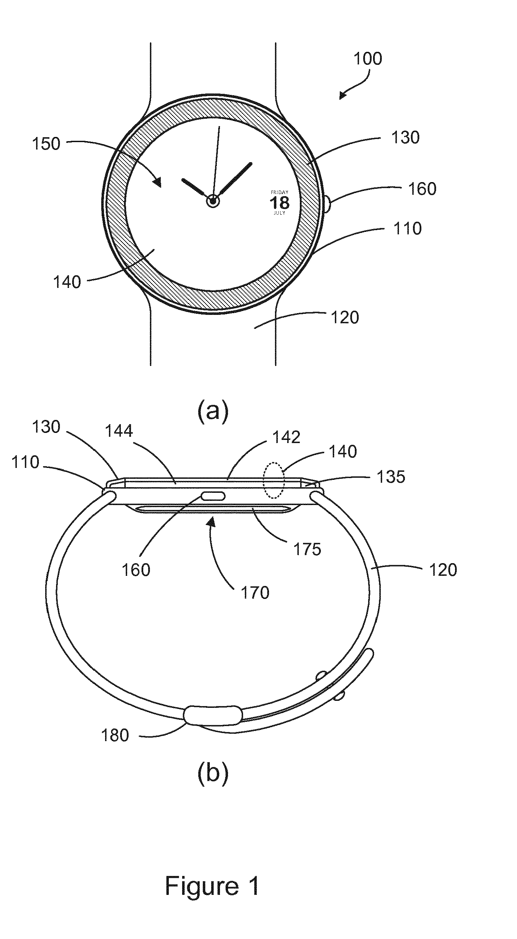

A smart watch 100 constructed in accordance with an exemplary embodiment of the present disclosure is shown in Figures 1(a) and 1(b). The smart watch 100 includes a housing 110 shaped to be worn on the arm of a user, and is coupled to the user's wrist via a wristband 120. The wristband 120 is tightened onto the user's wrist via a catch 180. The housing 110 generally includes a top surface 150 and a bottom surface 170 as shown in Figure 1(b). The bottom surface 170 may be shaped to fit against the user's wrist and a top surface 150 may generally be facing away from the bottom surface 170 and wrist. The bottom surface 170 may include an input transducer 175 such as a sensor to monitor various aspects of a user's body. These aspects may include skin temperature and moisture content, pulse, motion, for example.

A display 140 is disposed in the top surface 150 so that it may be viewed while the smart watch 100 is worn on the wrist of the user. The display 140 provides part of a user interface of the smart watch 100. The display 140 may include a generally transparent lens crystal 142 for covering and protecting the internal electronic components 144 of the display 140. Such electronic components may include but are not limited to a liquid crystal display (LCD), light emitting diode (LED) display, polymer light emitting diode display (PLED), or any like display employing thin screen display technology. Collectively the lens 142 and the electronic components 144 give rise to a touch sensitive display 140. The electronic components 144 enable the projection of application images on the display 140 thereby providing a user interface to the user. The touch sensitive display 140 may also be pressure-sensitive in that it may be able to determine a measure of magnitude of a force applied with a touch input. The display 140 may also detect hovering touch input, e.g. input that is provided in close proximity above or near the display 140 without the input element touching the display 140.

The smart watch 100 includes an input transducer 130 associated with the periphery of the display 140. There may be various forms for the input transducer 130, three example forms for the input transducer 130 are introduced below.

The first form for the input transducer 130 is the peripheral region of the touch-sensitive display 140. Mechanically and electrically, the input transducer 130 of the touch sensitive display is not distinct from the rest of the touch-sensitive display 140, however the hardware of the smart watch 100 is configured to distinguish touch interactions that relate to the periphery 130 of the display 140 from other touch interactions with the display 140. With the first form of input transducer, the input transducer 130 may not be visibly distinct from the rest of the display 140, e.g. there may not be any control of the display 140 that causes the peripheral region 140 to appear differently to the non-peripheral region. This provides an advantage of maximising use of the area of the display 140. Alternatively, the input transducer 130 may be visibly distinct from the rest of the display, for instance by being differently coloured, or being blurred or a different brightness compared to the rest of the display.

The second form is a touch-sensitive input transducer 130 that surrounds the touch sensitive display 140 but does not have display capabilities and is not part of the display 149. This input transducer 130 forms part of the bezel, being the mechanical structural component that surrounds the touch-sensitive display 140. This bezel 130 is in a fixed position relative to the display and to the housing of the smart watch 100 and is unable to be rotated by the user. The bezel 130 provides some mechanical protection for the display 140. The bezel 130 may be formed e.g. of metal or plastic and/or the like. It may be joined to the housing 110 in a water-resistant or water-proof manner to prevent the intrusion of fluids into the housing.

The first and second forms for the input transducer 130 may be termed smart bezels.

The third form is a bezel 130 that surrounds the display 140 at its periphery and is able to be rotated circumferentially to the display 140. The bezel 130 is similar in appearance to rotatable bezels that have been provided on diver's watches for many years, although here the smart watch 100 includes an input transducer by which rotation and/or the absolute rotational position of the bezel can be detected and used to effect control of the smart watch 100.

The third form for the input transducer 130 may be termed a mechanical bezel.

Further, a combination of mechanical and smart bezels may also be employed in embodiments of the present disclosure. Although a smart bezel is depicted in the embodiment of Figures 1(a) and (b), it will be understood that any of the above bezel types may be used in relation to any of the embodiments of the present disclosure, i.e. a smart watch 100 according to the present disclosure may comprise any of: a mechanical bezel, a smart bezel, and a combination bezel.

The smart watch 100 may be e.g. a watch device, a fitness tracking device, a wearable device and/or the like. If the device 100 is not generally worn on the user's wrist, it may not be labelled a smart watch.

Figure 2 shows several bezel implementations according embodiments of the present disclosure. Figure 2(a) illustrates a smart watch 100 with a round face that accommodates a mechanical rotating bezel 210. The mechanical bezel 210 may be used to provide control to the smart watch 100.

Figure 2(b) illustrates a smart watch 100 with a round face that accommodates a smart bezel 220. The smart bezel 220 does not rotate in relation to the display 140 of the smart watch 100 and has a surface that detects touch from a user's finger. In some embodiments, a non-rotating smart bezel 220 may constitute an outer part of the main display 140. The smart watch 100 may provide tactile feedback to the user when the user provides an input to the smart bezel 220.

Figure 2(c) illustrates a combination of a mechanical rotating bezel and a smart bezel based on touch surface, said combination bezel surrounding a smart watch 100 with a round face. In this case, the touch surface may be utilized for controlling the smart watch, while the rotating bezel may include marks and may be used in a way bezels are traditionally used.

While the smart watch 100 has been described thus far with a round face, it will be understood that any shape may be used for the face of the smart watch. In relation to the bezel types illustrated in Figure 2, the smart bezel 220 can be implemented on smart watches with any shape, while the mechanical 210 and combination 230 bezel types are implemented on smart watches with circular faces but could also be implemented with, for example, a square face if a flexible bezel is provided.

The input transducer 130 and the display 140 form the user interface that the user is able to interact with to control the operation of applications running on the smart watch 100. The user is therefore able to provide at least one user input via at least one of the input transducer 130 and the display 140. In the case of the input transducer 130 being part of the display 140, the display in effect has two regions: the input transducer 130 and a non-peripheral region.

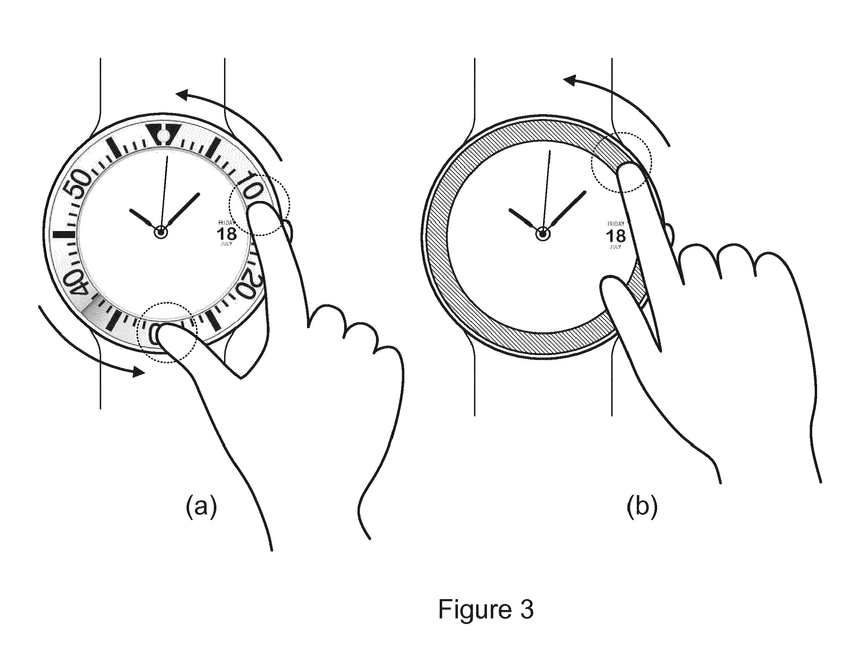

Figures 3(a) and (b) illustrates user inputs for a mechanical bezel 210 and a non-rotating smart bezel 220, respectively, according to embodiments of the present disclosure. The former may be controlled by grasping it, for example by thumb and forefinger and then by twisting the bezel 210 to rotate it in relation to the watch face, as shown in Figure 3(a). The latter may be controlled, for example by sliding a finger on top of the surface of the bezel, as shown in Figure 3(b). The combined smart bezel 230 may be controlled in both ways as shown in Figures 3(a) and (b). Note that for the combination smart bezel 230 the user inputs may control separate functions of the smart watch 100.

The smart watch 100 may also include a button 160 that is able to receive a user input. The button 160 may be depressed or extended about the housing 110. The button 160 may also be rotatable about an axis. Thus the user input available with respect to the button 160 is at least one of pushing, pulling or rotating the button with respect to the housing 110. While only one button 160 is shown in Figure 1, it will be understood that more than one button 160 may be present on the smart watch 100. The user inputs enable the user to interact with the applications running on the smart watch 100.

The input transducer 130, display 140, button 160, and housing 110 and the joints or connections there between may be made substantially waterproof or water-resistant to prevent the intrusion of liquids and other foreign objects within the housing 110.

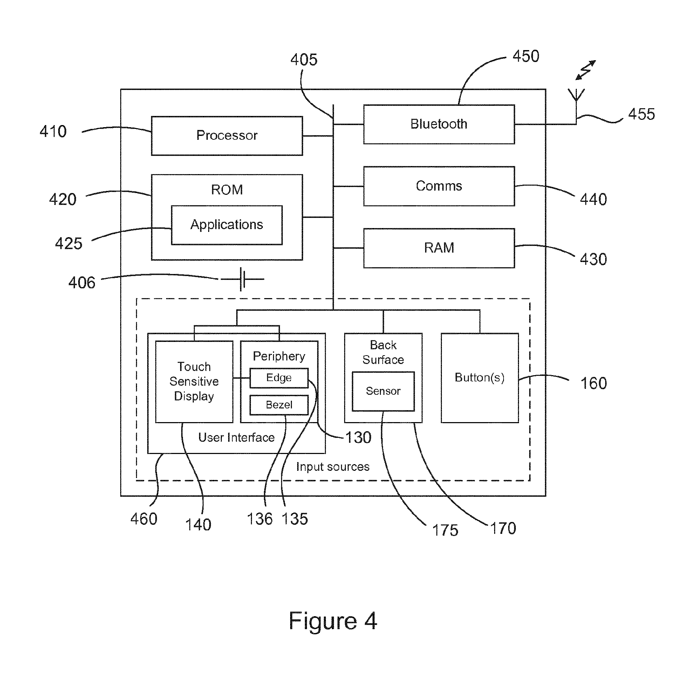

The internal structure of the smart watch 100 will now be described with respect to Figure 4 according to embodiments of the present disclosure.

The smart watch 100 includes a processor 410. The processor 410 is connected to volatile memory such as RAM 430 by a data bus 405. The bus 405 also connects the processor 410 and the RAM 430 to non-volatile memory, such as ROM 420. A Bluetooth module 450 is coupled to the bus 405, and thus also to the processor 410 and the memories 420, 430. An antenna 455 is coupled to the Bluetooth module 450. A plurality of software applications 425 is stored within the ROM 420. The software applications 425 in these embodiments are the foreground and background application(s) as previously described. The smart watch 100 also has a communication interface 440 connected to the processor 410 via the bus 405.

The smart watch 100 also includes a source of power 406. The source of power 406 may be for instance a battery such as a coin cell or an internal rechargeable battery. The source of power 406 powers the components of the smart watch 100.

Also connected to processor 410, and memories 420, 430, are the various input sources 480 available on the smart watch 100. These inputs include the user interface 460, the sensor 175 located on the back surface 170 of the smart watch housing 110, and the one or more input buttons 160 available on the smart watch housing 110. The user interface 460 primarily comprises the touch sensitive display 140 and the input transducer 130.

The communication interface 440 may be configured to allow two-way communication with external devices and/or networks. The communication interface 440 may be configured to communicate wirelessly via one or more of several protocols such as Global System for Mobile Communications (GSM), Universal Mobile Telecommunications System (UMTS) and IEEE 802.11 (Wi-Fi). Alternatively or additionally, the communication interface 440 may be configured for wired communication with an external device or network.

The Bluetooth module 450 includes a communication stack that is implemented at least partly in software using processor and memory resources (not shown), all of which can be included within the Bluetooth module 450. The Bluetooth module 450 also includes a transceiver and is able to communicate with external Bluetooth enabled devices. The transceiver is capable of receiving data from such Bluetooth enabled external devices physically located within the Bluetooth range of the smart watch 100.

External devices referred to above may include e.g. a mobile phone, smartphone, netbook, notebook, television, refrigerator, audio/video amplifier, a fitness tracking device or laptop computer from which application data may be transferred to the smart watch 100. Additionally, external networks may include a cloud network through which applications may be downloaded to the smart watch 100. The cloud network may permit such downloads from an on-line application store. The communication interface 440 and the Bluetooth module 450 therefore enable the transfer of data that is required for the installation of applications on the smart watch 100. Alternatively or additionally, the data transferred from the communication interface 440 and the Bluetooth module 450 may be in the form of updates for applications already installed on the smart watch 100. Such data, when downloaded to the smart watch 100, are stored in the non-volatile memory 420 of the smart watch 100. These applications form the foreground application and the background application(s) as previously described.

Further, applications running on the processor 410 of the smart watch 100 may generate data, e.g. data pertaining to a change in a parameter value of an application. In instances where the application on the smart watch 100 synchronises with a corresponding application running on an external mobile device, data generated by the application on the smart watch 100 is transmitted (at regular or timed intervals as predetermined by the application) to the external mobile device via either the communications interface 440 or the Bluetooth module 450, the latter only being possible if the external device is Bluetooth enabled and within the Bluetooth range of the smart watch 100.

Generally speaking, the smart watch 100 may comprise processing circuitry, including one or more processors 410, and a storage device 420, 430, comprising a single memory unit or a plurality of memory units. The storage device 420, 430 may store computer program instructions 425 that, when loaded into the processing circuitry 410, control the operation of the smart watch 100.

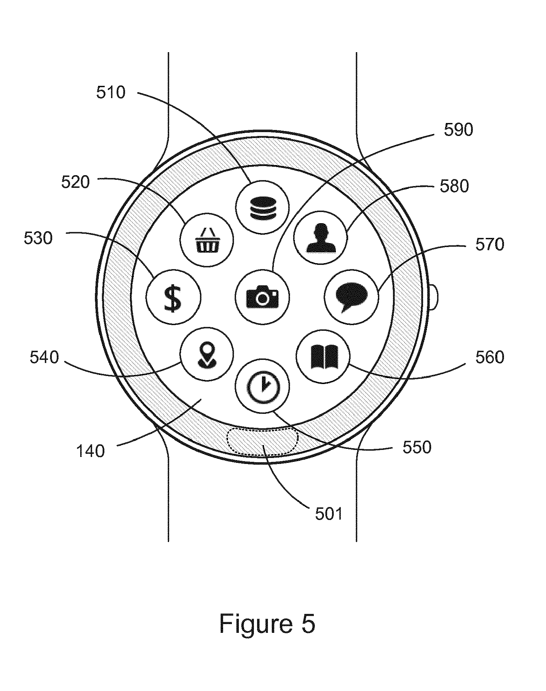

Figure 5 illustrates a smart watch 100 according to example embodiments of the present disclosure. The device depicted in Figure 5 is provided with a smart bezel, however any bezel type as shown in Figure 2 may be used with the smart watch 100. The touch sensitive display 140 shows a 'home' screen. The home screen comprises icons 510 to 590, each of which representing an application that is running on the smart watch 100. For example, the icons could represent applications such as tipping calculator 510, a shopping cart 520, a parking time application 530, a map application 540, a timer 550, a news application 560, a text repository 570, a contacts folder 580, and a camera 590.

When a user touches the display 140 at a location at which an icon is displayed, the application which the icon represents generates an application image that is displayed on the display 140 of the device 100. For example, when the user's finger touches the display 140 at a location which displays the icon for the map application 540, a map application generates an application image that fills the display 140. In other words, when the icon for the map application 540 is touched, an application image corresponding to the map application replaces the contents of the home screen.

When the display 140 shows the application image generated by an application, the user may return to the home screen by providing an input to the smart watch 100. This input may be one provided at a specifically assigned location of the periphery of the display 140 or on provided to the button 160. This specifically assigned location will be referred to as the 'home location' from hereon. Such an input may be of the forms as previously discussed in relation to the bezel and the button 160. An example home location is region 501 shown in Figure 5. When an input is provided by the user to return to the home screen, any application image provided on the display 140 is replaced with the icons 510 to 590 as shown in Figure 5.

The application that was running, the map application, as used in the example above, runs in the background, and thus is a background application. When the user touches the display 140 at a location which displays another icon, for example, the icon representing the camera application 590, the camera application would generate an application image that fills the display 140. In other words, when the icon for the camera application 590 is touched, a further application image corresponding to the camera application replaces the contents of the home screen. Thus in this case, the smart watch 100 displays the camera application image in the foreground while having the map application image in the background. To use terminology used in the above description, in this scenario, the camera application image is the foreground application which corresponds to the foreground application image and the map application is the background application which corresponds to the background application image.

When the smart watch 100 displays the foreground application image, the user is able to provide an input to the background application even though the background application image is not provided on the display 140. Thus, when the camera application image is displayed, the user is able to provide an input to the map application running in the background even though the map application image is not displayed. Such an input is provided to the input transducer 130.

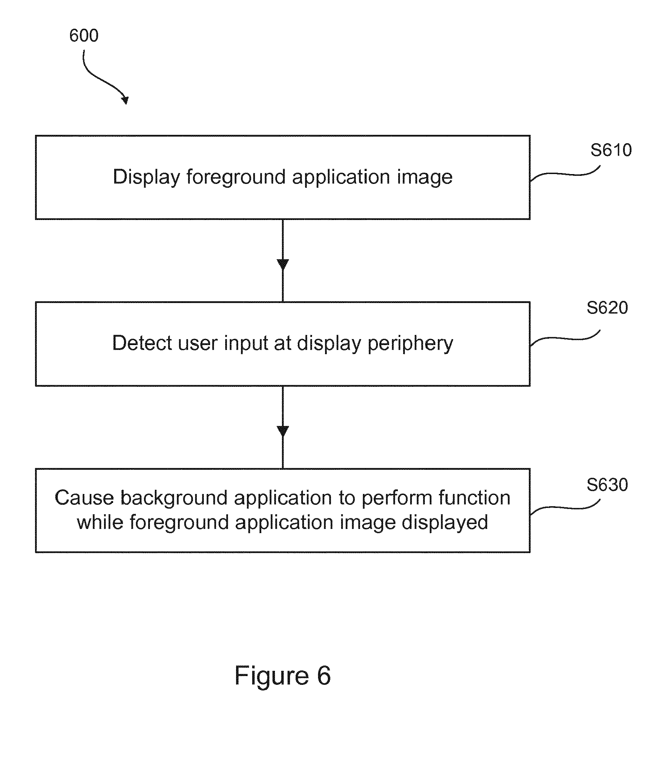

A method 600 according to the present disclosure will now be described with respect to Figure 6 and mostly with reference to the smart watch 100. Here, the processor 410 is running at least two applications: a foreground application and a background application. The input transducer 130 of the smart watch 100 has been assigned to control the background application, in particular by causing information about the background application to be displayed and to adjust a parameter associated with the background application.

The method starts at step S6io where the foreground application generates a foreground application image for display on the face of the smart watch 100. This foreground application image is generated as the processor 410 executes code stored in the non-volatile memory 420 relating to the foreground application. The processor 410 provides image data to the touch sensitive display 140 such that a foreground application image is displayed on the face (display 140) of the smart watch 100.

The method then proceeds to step S620, in which a user input is detected at the input transducer 130 of the display 140. This user input is in the form of user movement around the periphery of the display 140. The input is an input along the periphery of the display in the sense that the input starts at one location on the periphery of the display and extends to a different location on the periphery of the display. The length of the input may be determined to be an input along the periphery of the display in response to a determination that the length exceeds a threshold amount, for instance equal to 10% of the circumference of the display 140. The input is circumferential in that it extends around a part of the circumference.

At step S630, in response to detecting the user input around the periphery of the display 140 through the input transducer 130, the processor 210 executes a function in relation to the background application. This function may be the temporary display of an image on the face of the smart watch 100 and/or a change of a parameter associated with the background application. The image is arranged to overlay at least part of the foreground application image. This image provides information to the user. The image is cleared from the display 140 after a predetermined period of time, thereby leaving the foreground application image on the display 140.

The method 600 will further be described in relation to the following examples.

### Parking time payment

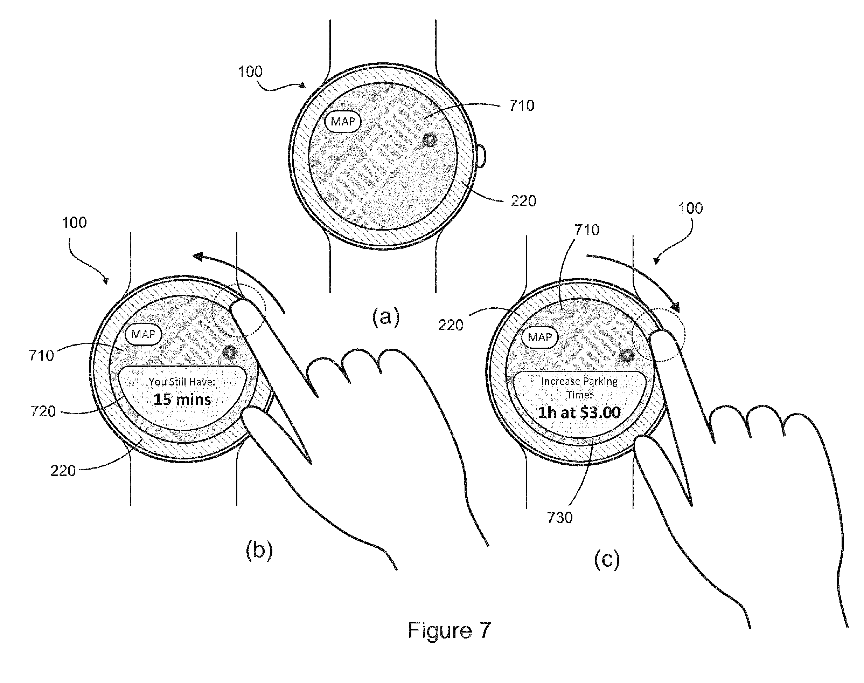

A user wearing a smart watch according to embodiments of the present disclosure decides to do some shopping in a shopping district. The smart watch has a smart bezel similar to bezel 220 depicted in Figure 2(b). He finds the shop using a map application running on the smart watch, such as the application represented by icon 540 on the smart watch 100 shown in Figure 5. The map application presents a user with a map 710 of the local region, similar to that depicted in Figure 7(a). The map application is therefore the foreground application and the map presented to the user on the face of the watch (display 140) is the foreground application image.

The user parks his car at or near to the shopping district and pays for a predetermined amount of parking time using a parking time application on his smart watch, such as the application represented by icon 530 on the smart watch 100 shown in Figure 5. He does this by touching the home location on the bezel 220 which provides the user with icons representing all applications running on the smart watch, and clicks the parking payment icon. After paying for the predetermined amount of parking time, he returns to the map application and uses it to guide him to a particular shop. The parking payment application is therefore now running in the background; it thus comprises the background application. At this stage the user is not interacting with the parking payment application and thus the parking payment application does not cause any content to be displayed on the display 140. This background application image is replaced by the map application image (foreground application image) that the user uses to guide him to the restaurant.

It should be noted that the in this example, a setting has been applied such that the parking payment application responds to inputs provided on the smart bezel 220. The method of allowing a user to make such a setting is described below.

While using a map application on the watch 100 to navigate from one shop to another, the user checks the amount of parking time has left on his smart watch. He does this by providing an input to the smart bezel 220 in the form of sliding his finger counterclockwise along the smart bezel 220, as illustrated in Figure 3(b). This constitutes an input along the periphery of the display 140. The input is along the periphery of the display in the sense that that the input starts at one location on the periphery of the display and extends to a different location on the periphery of the display. The input is circumferential in that it extends around a part of the circumference.

Prior to the user input along the periphery of the display 140, the map application image 710 is still displayed on the face of the smart watch, as shown in Figure 7(b). In response to the user input, the smart watch 100 temporarily displays an image 720 showing the amount of parking time the user has left. This image provides the user with the value of a parameter associated with the parking time application; in this case the parameter is remaining parking time. The image 720 is laid over the map image 710. At this time, content from the background application is being displayed on the display 140. The smart watch 100 is configured such that the image 720 disappears after a predetermined period of time (for example, two seconds), after which the content from the map application is then the only application content that is displayed on the display 140.

In this scenario, the user realises shortly after the content from the parking payment application is displayed that the parking time he has paid for is not sufficient. He then adds more parking time by using the smart bezel 220 on his smart watch 100 whilst the image 720 is being displayed. He does this by providing a second input to the smart bezel 220 by simply touching the smart bezel 220 on his smart watch and sliding his finger along the smart bezel 220 in a clockwise manner. In doing so, he adds more parking time associated with the parking time application (background application) without leaving the map application (foreground application). This situation is illustrated in Figure 7(c).

By sliding his finger on the smart bezel 220 in a clockwise direction, a value of a parameter associated with the parking time application, in this case the remaining parking time parameter, is incremented by an amount. This amount may be a fixed amount or an amount that correlates to the distance the user's finger has traversed along the smart bezel 220. Alternatively, the user input may be in the form of at least one tap on the smart bezel 220 where each tap increments the parking time parameter by a predetermined amount (for example, 30 minutes).

The parking payment application running in the background may also temporarily display an image 730 showing the amount of parking time the user has added. The image 730 is laid over the map image 710, and disappears after a predetermined period of time (for example, two seconds).

In this example illustrated in Figure 7(c), the user slides his finger along the smart bezel 220 and increments the parking time parameter such that one hour has been added to the parking time. The resulting image 730 is laid over the map image 710, and disappears a predetermined period of time (for example, two seconds) after the input ceases to be applied.

The above description is of a two-stage process, the first stage involving a first input that results in content from the background application being caused to be displayed and the second involving a second input that results in the change of a parameter associated with the application. Both inputs are associated with the input transducer 130 at the periphery of the display 140. At least one of the inputs to which response is made by the smart watch 100 is an input along the periphery of the display in the sense that that the input starts at one location on the periphery of the display and extends to a different location on the periphery of the display. The length of the input may be determined to be an input along the periphery of the display in response to a determination that the length to exceeds a threshold amount, for instance equal to 10% of the circumference of the display 140. The input is circumferential in that it extends around a part of the circumference. The other input may be a short press input (an input at one location for less than a threshold time), a long press input (an input at one location for greater than a non-zero threshold time, for instance half a second), a sequence of multiple short press inputs, a sequence of long press inputs, or an input along the periphery. The long and short press inputs apply e.g. to smart bezel embodiments.

Whilst content from the background application is being displayed after the first and second inputs, the background application does not become the foreground application. Instead, a short time after the relevant input is removed, the content from the background application ceases to be provided and the content from the foreground application instead occupies the whole of the display area. At this time, a user input, other than an input of the type that results in the background application providing content, results in interaction with the foreground application or with the underlying operating system.

While the above example involves a smart watch 100 with a smart bezel 220, it will be understood that any of the bezel types discussed in the relation to Figure 2 may be used.

### Tipping

A further example of the method of the present disclosure is control using the bezel of the smart watch 100 for incrementing the amount of a tip provided in a restaurant.

A user is in a restaurant enjoying lunch and catching up on news updates on his smart watch using the news application, such as that associated with icon 560 on the smart watch 100 depicted in Figure 5. The news application presents the user with news updates 810, similar to that depicted in Figure 8(a). The news application is therefore the foreground application and the updates presented to the user on the face of the watch comprise the foreground application image.

The user may have selected to activate a tip calculator upon entering the restaurant. On the other hand, the smart watch may know that the user is in a restaurant by using either his calendar entry, positioning information, or a combination of these pieces of information, and selecting the tip calculator automatically. The tip calculator may be activated through microphone input to the smart watch and speaker recognition. For example, it may be trained to detect a greeting "Hi, my name is Susan and I will be taking care of you today" and activate the tip calculator based on the recognised speech.

While it has been described that the smart watch 100 may be able to detect the user's location and detect a greeting by a waitress, it may be instead that the user's mobile device (such as a smart phone or a laptop) that is wirelessly connected to the user's smart watch provides such functionality. Data is then passed to the smart phone through such wireless connection.

In this example, the tip calculator runs in the background on the smart watch and is thus the background application.

The user decides to give the waitress a better tip instead of the default amount that is set in the tipping calculator application. To change the amount of tip, the user simply provides a user input to the smart bezel 220 on the smart watch 100, such as touching the smart bezel 220, and slides his finger in a clockwise direction along the smart bezel 220 to command the tip calculator. By providing such a user input to the smart bezel 220, the user increments the tip percentage associated with tip calculator application (background application) without leaving the news application (foreground application). This situation is illustrated in Figure 8(b). Alternatively, the user input may be in the form of at least one tap on the smart bezel 220 where each tap increments the tip percentage by a predetermined amount (for example, 2 % of the bill).

The tipping calculator application running in the background may also temporarily display an image 820 showing the amount of tip the user has added. The image 820 is laid over the news application image 810, and disappears after a predetermined period of time (for example, two seconds). The image 820 informs the user that he has just increased the tip percentage, and the user may continue browsing the headlines without interruption.

As the user leaves the restaurant and pays using an electronic payment means, the increased tip is automatically added. The amount the user is tipping is thus not visible to other customers, and the user needs not carry out any additional actions to give the tip he considers appropriate.

The tip calculator may collect aggregate user data on tipping behaviour, as well as location or restaurant chain specific data. The tip calculator may access aggregate data from other users, for example via an online review service. The user input provided to the smart bezel 220 of the smart watch 100 to increase the tip may do so in various ways; for example the tip can be increase by increasing the absolute tip percentage, the tip percentage relative to user's past level of tipping, or the tip percentage relative to an aggregate data from other users at current location based on data provided from an online review service.

In this example, only one input is required by the user to change the amount of the tip, i.e. control the background application to perform a function. Alternatively, changing the tip may be a two-stage process, the first stage involving a first input that results in content from the background tipping application being caused to be displayed (e.g. the current, initial or default tip amount) and the second involving a second input that results in the change of the tip value associated with the tipping application. Both inputs are associated with the input transducer 130 at the periphery of the display 140. At least one of the inputs to which response is made by the smart watch 100 is an input along the periphery of the display in the sense that that the input starts at one location on the periphery of the display and extends to a different location on the periphery of the display. To be determined to be an input along the periphery of the display, the he length of the input may exceed a threshold amount, for instance equal to 10% of the circumference of the display 140. The input is circumferential in that it extends around a part of the circumference. The other input may be a short press input (an input at one location for less than a threshold time), a long press input (an input at one location for greater than a non-zero threshold time, for instance half a second), a sequence of multiple short press inputs, a sequence of long press inputs, or an input along the periphery. The long and short press inputs apply only to smart bezel embodiments.

Whilst content from the background application is being displayed after the first and second inputs, the background application does not become the foreground application. Instead, a short time after the relevant input is removed, the content from the background application ceases to be provided and the content from the foreground application instead occupies the whole of the display area. At this time, a user input, other than an input of the type that results in the background application providing content, results in interaction with the foreground application or with the underlying operating system.

While the above example involves a smart watch 100 with a smart bezel 220, it will be understood that any of the bezel types discussed in the relation to Figure 2 may be used.

As seen from the preceding examples, the smart bezel readily allows interaction with a background application without interfering with the user's enjoyment of the foreground application.

### Global Setting

Assigning functionality to the input transducer 130 of the smart watch 100 according to embodiments of the present disclosure will now be described. Such a setting is termed 'global setting' and will be referenced as such in the description that follows. Global setting is additional to the features described above that permit interaction with a background application.

Figure 5 illustrates a smart watch 100 where a home screen is displayed on the face of the smart watch. As previously described if the display 140 of the smart watch 100 shows an application image (such as those shown in Figures 7(a) and 8(a)), the home screen can replace such images when the user provides an input to the home location on the input transducer 130, which is located at the periphery of the display 140.

Figure 9(a) shows a smart watch 100 according to embodiments of the present disclosure. The input transducer 130 here is realised by a smart bezel 220 as described in relation to Figure 2(b). The smart watch 100 shows the home screen where applications running the smart watch 100 are represented by icons 510 to 590.

Easy access may be provided for changing the functionality related to the smart bezel 220. In regular use, the user may, reorganize the icons, zoom in and out, and select the application he wishes to use by manipulating the icons 510 to 590 displayed on the touch sensitive display 140 with his finger.

The function associated with the smart bezel, i.e. the functionality of the smart bezel 220, may be set e.g. by a multi-point touch as shown in Figure 9(a). Here the user touches a portion of the display 140 at a location where the icon representing the application of interest is displayed. At the same time, the user also provides an input to the smart bezel 220 in the form of a touch/tap or a movement around the smart bezel (such as a sliding his finger along the smart bezel 220). In the example shown in Figure 9(a), the user touches the display 140 at a location where the tip calculator icon 560 is displayed with his thumb, while simultaneously sliding his forefinger along a portion of the smart bezel 220. By using such multi-point touch to set the functionality of the smart bezel 220, the smart watch 100 now allows adjustments of a tip amount when the smart bezel 220 is used regardless of the application image shown on the display 140. In other example embodiments, the function associated with the smart bezel 220 may be set with a series of taps, touches, voice input and/or the like. For example, the user may select the icon by tapping and the device enters into an edit mode. While in the edit mode, the user may provide an input to the smart bezel 220 in the form of a touch/tap or a movement around the smart bezel (such as a sliding his finger along the smart bezel 220). The input sets functionality of the smart bezel, and in the example of tip calculator, the smart watch 100 now allows adjustments of a tip amount when the smart bezel 220 is used regardless of the application image shown on the display 140.

Figure 9(b) shows a smart watch 100 according to embodiments of the present disclosure. The input transducer 130 here is realised by a mechanical bezel 210 as described in relation to Figure 2(a). The smart watch 100 shows the home screen where applications running the smart watch 100 are represented by icons 510 to 590.

As with the smart bezel 220, the functionality of the mechanical bezel 210, may be set e.g. by a multi-point touch as shown in Figure 9(b). Here the user touches a portion of the display 140 at a location where the icon representing the application of interest is displayed. At the same time, the user also provides an input to the mechanical bezel 210 in the form of a rotation of the crown of the mechanical bezel 210. In the example shown in Figure 9(b), the user touches the display 140 at a location where the camera icon 590 is displayed with his forefinger, while simultaneously rotating the crown of the mechanical bezel 210 with his thumb and middle finger. By using such multi-point touch to set the functionality of the mechanical bezel 210, the smart watch 100 now allows actuation of a camera controlled by the smart watch 100, for example, when the mechanical bezel 210 is used regardless of the application image shown on the display 140.

In other example embodiments, the functionality of the mechanical bezel 210, may be set with different ways, such as entering the device into an edit mode. While in the edit mode, the user may then select the application, the functionality of which the user wants to control with the mechanical bezel 210. The user may then associate different kind of inputs to the mechanical bezel 210 that can be used to cause different actions to be performed. For example, in the context of camera application, the user could long-press the camera icon (or other icon) to enter into an edit mode. While in the edit mode, the user can select a subfunction of the camera application, e.g. taking a photo, and then rotate the mechanical bezel 210 clockwise to associate taking a photo function to the gesture of rotating the mechanical bezel 210 clockwise. Different applications and application functions may be set by a user in a similar manner by virtue of the smart watch 100 being suitably configured.

In other example embodiments, the user may define which background applications can be controlled while in a certain foreground application. While the user is associating a function to the smart bezel 220 or the mechanical bezel 210, a further input may be provided to enter into the foreground application selection. For example, when the user is associating the tip calculator functionality as depicted in Figure 9(a), the user may provide a force touch on the bezel, e.g. touching the bezel with certain kind of pressure, and in response to detecting such an input a grid of application icons is caused to be presented on the display 140 by the processor. The user can then select one or more of the icons corresponding to the application. Once selected, the tip calculator functionality can be accessed while in the selected applications. E.g. if the user selects the map icon corresponding to the map application, the user can later access the tip calculator functionality with the input transducer 130 while in the map application.

In other example embodiments, the device 100 is configured to deduce when background application inputs may be used. For example, the context of the foreground application may affect which background application inputs are possible and allowed to be input and performed. For example, the device may detect that the tip calculator functionality associated to the bezel may be performed while in a news application, in a web browser, or in a mail application but not in a banking application, where instead a similar input on the bezel causes a different background application function to be performed. For example, in response to the input the function that is performed may relate to the last background application that was running, any of the background applications that are running, or relate to the most probable background application in the context of the foreground application. For example, if the foreground application is a map application and there is a parking time application and a news application running, the device 100 may deduce that the user input to the bezel relates most probably to the parking time application and performs the function associated with the parking time application.

In other example embodiments, in the event of the input on the bezel matching multiple background applications, the device 100 may provide a list of running background applications and be responsive to a user selection of the application that they wish to control with the bezel input by setting that application for control. The function associated with that application later are performed while the focus remains in the foreground application.

While Figures 9(a) and 9(b) exemplify changing the global settings of the smart watch 100 with respect to smart 220 and mechanical 210 bezels, it will be understood that similar multi-point touch techniques can be used to set the functionality of the input transducer 130 of a smart watch 100.

A method 1000 according to embodiments of the present disclosure will now be described with respect to Figure 10 and with reference to the smart watch 100.

The method starts at step S1010 where the processor 410 determines if the home screen is displayed on the display 140. If the home screen is displayed, the method progresses to step S1020 where the processor 410 determines if a user input is provided at the touch sensitive display 140. In step S1030, the processor 410 determines if a user input has been provided on the periphery 130 of the display 140. The processor 410 then determines the location of the user input in relation the current state of the home screen. In this manner, the processor is able to determine the application which the user desires to be controlled by the periphery 130 of the display 140. The processor 410 then associates any further user inputs provided at the periphery 130 of the display with the selected application, regardless of the application image displayed on the display 140. This may be done by setting a variable in the volatile memory 430 of the smart watch 100.

If the home screen is not displayed (step S1040), the processor 410 determines if a user input is provided at a home location whereby the home screen is displayed on the display 140. The method then continues to step S1020.

While Figure 10 depicts a scenario where user input is provided to associate function to the periphery 130, it is to be understood that in some example embodiments the associations described above may be provided to the smart watch 100 in a settings-file, at manufacture phase, by a user defining the association off-line e.g. using a simulator environment and/or the like.

### Local Setting

The global settings enable the smart watch 100 to be responsive to an input through the input transducer 130 located at the periphery of the display 140 to provide a setting relating to an application as selected by the user. However some applications have several sub-settings which can be adjusted.

Taking the example of the tip calculator as discussed in relation to Figure 8 above, the tip calculator application may have several sub-settings available to the user. The tip calculator may enable the user to vary the amount of a tip according to an amount relative to a bill (e.g. a $5.00, $6.00, $7.00, etc. flat amount for the tip regardless of the bill amount), a percentage of a bill (e.g. 5%, 10%, 15%, etc. of the bill amount), or a tip that is dependent on a scoring count given by the user (e.g. $4.00 for a '1', $4.50 for a '2', $5.00 for a '3', etc.). Here the tip calculator is the background application.

A user wishing to change the sub-setting in which the selected application is controlled using input to the input transducer 130 located at the periphery of the display 140 can adopt the multi-point touch method as discussed above in relation to the global settings.

Using the example of Figure 8, where the foreground application is a news application displaying a foreground application image 810 on the display 140 of the smart watch 100, the user is able to change the sub-setting of the tip calculator which is controlled by the input transducer 130 by providing an input at any portion of the touch sensitive display 140 while simultaneously providing an input to the input transducer 130 located at the periphery of the display 140. This is depicted in Figure 11(a) where the user's thumb touches the display 140 while the user's forefinger touches the input transducer 130 (implemented in Figure 11(a) as a smart bezel 220).

A temporary sub-menu image 1110 is then provided on the display 140, as illustrated in Figure 11(b). The sub-menu image 1110 overlays the foreground application image 810 and displays the various sub-settings available in relation to the background application. In the case where the tip calculator is the background application, the available sub-settings are: tip percentage 1120, relative tip 1130 and tip count 1140; these are depicted as images within the sub-menu image 1100. These sub-settings are displayed in the sub-menu image 1110.

A currently selected sub-setting is highlighted to the user in the sub-menu image 1110. In Figure 11(b), the tip percentage 1120 is selected and is therefore highlighted. While touching the touch sensitive display 140, the user is able to move/slide his forefinger along the smart bezel 220 so as to toggle between the various sub-settings available in relation to the background application. For example, if the user wishes the smart bezel 220 to control the tip amount by relative tip, the relative tip image 1130 is highlighted as the user moves his forefinger in the anti-clockwise direction along the smart bezel 220 to indicate to the user that the smart bezel 220 now controls the tip amount by relative tip.

While Figures 11(a) and 11(b) exemplify changing the sub-settings of a background application of the smart watch 100 with respect to a smart bezel 220, it will be understood that similar multi-point touch techniques can be used to set the functionality of the input transducer 130 of a smart watch 100 in relation to a sub-setting of a background application regardless of its implementation according to embodiments of the present invention.

Embodiments of the present disclosure may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer.

A computer-readable medium may comprise a computer-readable storage medium that may be any tangible media or means that can contain or store the instructions for use by or in connection with an instruction execution system, apparatus, or device, such as a computer as defined previously.

According to various embodiments of the previous aspect of the present disclosure, the computer program according to any of the above aspects, may be implemented in a computer program product comprising a tangible computer-readable medium bearing computer program code embodied therein which can be used with the processor for the implementation of the functions described above.

Reference to "computer-readable storage medium", "computer program product", "tangibly embodied computer program" etc., or a "processor" or "processing circuit" etc. should be understood to encompass not only computers having differing architectures such as single/multi processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

By way of example, and not limitation, such "computer-readable storage medium" may mean a non-transitory computer-readable storage medium which may comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a "computer-readable medium". For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that "computer-readable storage medium" and data storage media do not include connections, carrier waves, signals, or other transient media, but are instead directed to non-transient, tangible storage media. Disk and disc, as used herein, include compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of "computer-readable medium".

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

If desired, the different steps discussed herein may be performed in a different order and/or concurrently with each other. Furthermore, if desired, one or more of the above-described steps may be optional or may be combined.

Although various aspects of the present disclosure are set out in the independent claims, other aspects of the present disclosure comprise other combinations of features from the described embodiments and/or the dependent claims with the features of the independent claims, and not solely the combinations explicitly set out in the claims. Various alternatives are included within the scope of the claims. Many such alternatives are described above, and some more will now be described.

In the above, at step S630, in response to detecting the user input around the periphery of the display 140 through the input transducer 130, the processor 210 causes an image to overlay at least part of the foreground application image so as to provide information to the user. The image is cleared from the display 140 after a predetermined period of time, thereby leaving the foreground application image on the display 140. Instead, the user may be notified through some other output, for instance an audio message. The same applies to other displayed information for background applications.

## Claims

1. A method comprising:
at a time when content from a foreground application is being displayed on a display, responding to a user input comprising movement around a periphery of the display by causing a background application to perform a function.

2. The method of claim 1, wherein causing a background application to perform a function comprises causing the background application to cause display of content generated by the background application.

3. The method of claim 1 or claim 2, wherein causing a background application to perform a function comprises causing the background application to change a value of a parameter associated with the background application.

4. The method of claim 3, comprising causing the background application to change the value of the parameter by an amount dependent on a size of the user input.

5. The method of claim 4, comprising the background application causing display of the value of the parameter as the parameter is changed by the user input.

6. The method of any preceding claim, comprising responding to a user input comprising an input at a location on the display associated with the background application applied simultaneously with an input at the periphery of the display by causing a global setting of association between later user inputs at the periphery of the display with the background application.

7. The method of any preceding claim, comprising responding to a user input comprising an input at a location on the display associated with the background application applied simultaneously with an input at the periphery of the display by causing a local setting specifying how parameters associated with the background application are adjusted in response to later user inputs at the periphery of the display causing the background application to perform a function.

8. The method of claim 6 or claim 7, wherein the location on the display associated with the background application comprises a location at which an icon associated with the background application is displayed.

9. The method of any preceding claim, comprising responding to a user input of a touch input moving between two locations around a periphery of the display by causing the background application to perform the function.

10. The method of claim 9, wherein the two locations are locations on a touch-sensitive display.

11. The method of claim 9, wherein the two locations are locations on a touch-sensitive non-display component.

12. The method of any of claims 1 to 8, comprising responding to a user input of rotation of a rotatable bezel located at the periphery of the display.

13. A computer program comprising computer executable instructions, which, when executed by an apparatus, causes the apparatus to perform a method according to any preceding claim.

14. Apparatus configured to perform the method of any of claims 1 to 12.

15. Apparatus comprising:
means for, at a time when content from a foreground application is being displayed on a display, responding to a user input comprising movement around a periphery of the display by causing a background application to perform a function.
